# EUROPEAN PATENT SPECIFICATION

(11) **EP 3 677 705 B1**
(45) Date of publication and mention of the grant of the patent: **11.11.2026**
(21) Application number: 19218313.5
(22) Date of filing: 19.12.2019
(51) Int. Cl.: C23C 22/34

(54) **TITANIUM-BASED COATINGS AND METHODS FOR MAKING COATINGS**
TITANBASIERTE BESCHICHTUNGEN UND VERFAHREN ZUR HERSTELLUNG VON BESCHICHTUNGEN
REVÊTEMENTS À BASE DE TITANE ET PROCÉDÉS DE FABRICATION DE REVÊTEMENTS

(30) Priority: 03.01.2019 US 201916239312
(43) Date of publication of application: 08.07.2020
(73) Proprietor: The Boeing Company, Arlington, VA 22202 (US)
(72) Inventor: VAJO, John J., Chicago, Illinois 60606-1596 (US); ADJORLOLO, Alain A., Chicago, Illinois 60606-1596 (US); GRAETZ, Jason, Chicago, Illinois 60606-1596 (US)
(74) Representative: Harris, Jennifer Lucy

(56) References cited:
- CN-A- 105 803 442
- CN-A- 106 987 832
- JP-A- 2006 181 911
- US-A- 3 066 055
- US-A- 4 444 601
- US-A1- 2018 346 673

## Description

### FIELD

Aspects of the present disclosure provide titanium-based coatings and methods for making titanium-based coatings on surfaces.

### BACKGROUND

Aircraft surfaces are typically made of a metal, such as aluminum, steel or titanium. Corrosion protection of aircraft metallic surfaces has typically relied on primers having hexavalent chromium. However, there is regulatory pressure to eliminate the use of hexavalent chromium from primers and pretreatments.

Therefore, there is a continuing need for new and improved corrosion resistant coatings and methods of forming corrosion resistant coatings.

US 2018/346673 A1 describes various embodiments referring to a method for preparing an oxide film on a polymeric substrate, wherein the oxide film is a titanium oxide film (which is optionally niobium- or silicon-doped) or silicon oxide film. The method comprises contacting a polymeric substrate with a liquid reagent comprising a polyalkoxysilane such as 3-aminopropyltriethoxysilane to form a layer of the polyalkoxysilane on the polymeric substrate by self-assembly, and contacting said layer with an aqueous mixture comprising (i) titanium tetrafluoride and/or a fluorine-containing titanium complex such as ammonium hexafluorotitanate and/or a fluorine-containing silicon complex such as ammonium hexafluorosilicate, and (ii) a fluorine scavenger such as boric acid, at a temperature of less than about 100° C. to obtained the oxide film on the polymeric substrate. An oxide film prepared by said method is also provided.

US 3 066 055 A describes a process and composition for producing aluminum surface conversion coatings.

CN 105 803 442 A describes a passive film treating agent for aluminum or aluminum alloy and a treating method thereof. The passive film treating agent for aluminum or aluminum alloy comprises the following components in parts by mass: 1 to 20 parts of inorganic acid, 1 to 20 parts of zirconate, 1 to 20 parts of titanate, 1 to 20 parts of aluminate and 0.2 to 1 part of a dispersing agent. According to the passive film treating agent for aluminum or aluminum alloy, relative to a traditional phosphorus-containing chromium-free passive film treating agent for aluminum or aluminum alloy which causes environmental pollution, the passive film treating agent for aluminum or aluminum alloy has the advantages that through 1 to 20 parts of inorganic acid, 1 to 20 parts of zirconate, 1 to 20 parts of titanate, 1 to 20 parts of aluminate and 0.2 to 1 part of the dispersing agent, a phosphorus-free chromium-free Zr-Ti passive film can be formed on the surface of aluminum or aluminum alloy, the passive film is said to be good in adhesive force, high in corrosion resistance degree and good in salt spray resistance property and film uniformity, and the obtained passive film is said to be guaranteed to maintain the same silver white metal appearance as aluminum or aluminum alloy.

JP 2006 181911 A describes a problem to be solved is to provide an original plate for lithographic printing by which images are not deteriorated even after repeating the reproduction and the printing of a printing plate many number of times in a lithographic printing process in which the original plate can repeatedly be used by the reproduction. The solution is stated to be a fluoride of a metallic element which is selected from groups IIa, Ilb and IVa of a periodic table is made to interact to the surface of an aluminum sheet. Thus, a metal oxide layer is formed on the surface of the aluminum sheet, and the aluminum sheet is used for this original plate for lithographic printing.

CN 106 987 832 A describes a colorless nano silane coating agent and a preparation method thereof. The colorless nano silane coating agent comprises an aqueous solution of sodium fluotitanate, nitric acid, fluorozirconic acid, fluoboric acid and sodium gluconate. The colorless nano silane coating agent disclosed by the invention is said to be free of a phosphor element and a chromium element, and is added with sodium gluconate, so that time of coagulation is delayed, and plasticity and strength of a formed film is said to be improved. A film layer of the colorless nano silane coating agent is said to have a thickness which can reach nanoscale, is uniform in film forming, is good in compactness, and is strong in adhesion force on paint and powder, and therefore, corrosion resistance of the colorless nano silane coating agent is said to be good.

US 4 444 601 A describes substrates, especially those having plated metal surfaces, are subjected to passivation treatments in baths that incorporate one or more film-forming agents at least one of which does not require chromium and includes anions or cations of elements other than chromium. Typically, the anions or cations are introduced as bath-soluble salts which react with the plated surface of the substrate to form an adherent, coherent passivation surface film. Also present within these baths are a source of hydrogen ions and a bath-soluble carboxylic acid or derivative activator for enhancing the rate of the passivation reaction. Articles passivated in baths incorporating these film-forming agents have a hydrophobic surface that are said to exhibit corrosion resistance and typically have a bright finish.

### SUMMARY

The present disclosure provide titanium-based coatings and methods for depositing titanium-based coatings onto aluminum surfaces.

According to an aspect, there is provided a coating disposed on a surface, the coating comprising: an oxygen content; a fluorine content; a titanium content; and a sodium content; wherein the coating comprises titanium dioxide and Na₅Ti₃F₁₄, wherein the coating has a titanium dioxide content of from about 5 wt% to about 95 wt%, based on the total weight of the coating, and wherein the coating has a Na₅Ti₃F₁₄ content of from about 5 wt% to about 95 wt%, based on the total weight of the coating.

According to another aspect, there is provided a method of making a titanium-based coating, the method comprising: contacting a substrate with an aqueous solution composition comprising: from about 0.01 M to about 0.8 M of a titanium fluoride; from about 0.2 M to about 2 M of a sodium salt; and from about 0.1 M to about 1.5 M of a fluorine scavenger; wherein the titanium fluoride is (NH₄)₂TiFₑ; and wherein the fluorine scavenger is selected from boric acid, alkali metal borate, ammonium borate, boron anhydride, boron monoxide, aluminum chloride, metallic aluminum, aluminum oxide, or a combination thereof.

### BRIEF DESCRIPTION OF THE DRAWINGS

So that the manner in which the above recited features of the present disclosure can be understood in detail, a more particular description of the disclosure, briefly summarized above, may be had by reference to aspects, some of which are illustrated in the appended drawings. It is to be noted, however, that the appended drawings illustrate only typical aspects of this present disclosure and are therefore not to be considered limiting of its scope, for the present disclosure may admit to other equally effective aspects.
FIG. 1 is a flow diagram of a method for forming a titanium-based coating, according to one aspect.
FIG. 2a is an optical image showing eight aluminum panels after application of titanium-based coating.
FIG. 2b is a scanning electron microscope image of a titanium-based coating, according to one aspect.
FIG. 3 is a graph illustrating polarization resistance of titanium-based coatings, according to one aspect.
FIG. 4A is a graph illustrating x-ray diffraction spectra of titanium-based coatings, according to one aspect.
FIG. 4B is a graph illustrating x-ray diffraction spectra of titanium-based coatings, according to one aspect.
FIG. 4C is a graph illustrating x-ray diffraction spectra of titanium-based coatings, according to one aspect.
FIG. 4D is a graph illustrating x-ray diffraction spectra of titanium-based coatings, according to one aspect.
FIG. 4E is a graph illustrating x-ray diffraction spectra of titanium-based coatings, according to one aspect.

To facilitate understanding, identical reference numerals have been used, where possible, to designate identical elements that are common to the figures. It is contemplated that elements and features of one aspect may be beneficially incorporated in other aspects without further recitation.

### DETAILED DESCRIPTION

Aspects of the present disclosure provide titanium-based coatings and methods for making titanium-based coatings on surfaces. In at least one aspect, a coating includes an oxygen content, a fluorine content, a titanium content, and a sodium content. The coating includes titanium dioxide and Na₅Ti₃F₁₄. The coating has a titanium dioxide content of from about 5 wt% to about 95 wt%, based on the total weight of the coating, and a Na₅Ti₃F₁₄ content of from about 5 wt% to about 95 wt%, based on the total weight of the coating. In one or more additional aspects, a method of making a titanium-based coating includes contacting a substrate with a composition that includes from about 0.01 M to about 0.8 M of a titanium fluoride, from about 0.2 M to about 2 M of a sodium salt, and from about 0.1 M to about 1.5 M of a fluorine scavenger. The titanium fluoride is (NH₄)₂TiF₆. The fluorine scavenger is selected from boric acid, alkali metal borate, ammonium borate, boron anhydride, boron monoxide, aluminum chloride, metallic aluminum, aluminum oxide, or a combination thereof

It has been discovered that including a sodium salt in the composition can provide a sodium content to the titanium-based coating (e.g. can provide Na₅Ti₃F₁₄, such as crystalline Na₅Ti₃F₁₄). Without being bound by theory, it is believed that the halide content of the salt additive can etch a native surface oxide on the substrate which provides deposition of a more adherent coating, as compared to conventional titanium-based coatings. In addition, halides are typically regarded as promoting corrosion of metal substrates, such as aluminum substrates. However, it has been discovered that titanium-based coatings of the present disclosure formed from halide-containing salts, and the coatings including sodium content (e.g. Na₅Ti₃F₁₄, such as crystalline Na₅Ti₃F₁₄), can provide improved corrosion resistance as compared to a titanium-based coating without a sodium content.

### Titanium-Based Coatings

Titanium-based coatings of the present disclosure include an oxygen content, a fluorine content, a titanium content, and a sodium content.

In at least one aspect, a titanium-based coating has a substantially uniform thickness. Different thicknesses of the titanium-based coating may be obtained by controlling contact time of the substrate with the aqueous solution composition, as described in more detail below. Generally, a longer contact time results in a thicker coating.

For example, thickness of the titanium-based coating may be from about 0.01 mil (0.000254 millimeter) to about 0.5 mil (0.0127 millimeter), such as from about 0.02 mil (0.000508 millimeter) to about 0.2 mil (0.00508 millimeter), such as from about 0.05 mil (0.00127 millimeter) to about 1.5 mil (0.0381 millimeter), such as about 1 mil (0.0254 millimeter). Thick coatings can increase corrosion resistance as compared to a thinner coating. However, too thick of a coating may crack and/or flake off.

In one or more aspects, a titanium-based coating of the present disclosure contains an amorphous metal oxide phase and a crystalline sodium-containing phase. The term "amorphous" as used herein refers to a solid material that does not exhibit long-range crystalline order and/or has no substantial crystal lattice structure, as determined by X-ray diffraction. The term "crystalline" as used herein refers to a solid material that exhibits long-range crystalline order and/or has substantial crystal lattice structure, as determined by X-ray diffraction. Without being bound by theory, an amorphous phase does not have crystal grain boundaries, and the reduction in the number of crystal grain boundaries provides improved structural integrity of the coating, as compared to a crystalline coating.

Crystallinity can be determined by the width of a diffraction peak. For example, for a crystalline substance, the width is about 1 degree or less. If the width is greater than 2 degrees or up to 10 degrees, then it is amorphous.

Metal of the metal oxide is titanium (Ti). Accordingly, the titanium-based coating may include an amorphous titanium oxide phase and a crystalline titanium fluoride phase.

A titanium-based coating of the present disclosure has a fluorine content. For example, a titanium-based coating may have a fluorine content of from about 1 atomic percent (at. %) to about 80 at. %, such as about 10 at. % to about 70 at. %, about 15 at. % to about 50 at. %, about 20 at. % to about 50 at. %, about 25 at. % to about 50 at. %, about 30 at. % to about 45 at. %, about 35 at. % to about 45 at. %, or about 38 at. % to about 42 at. %, for example about 40 at. %, as determined by X-ray spectroscopy (EDX).

A titanium-based coating of the present disclosure has an oxygen content. For example, a titanium-based coating may have an oxygen content of from about 1 atomic percent (at. %) to about 80 at. %, such as about 5 at. % to about 60 at. %, about 5 at. % to about 50 at. %, about 10 at. % to about 50 at. %, about 15 at. % to about 45 at. %, about 18 at. % to about 35 at. %, about 20 at. % to about 30 at. %, or about 22 at. % to about 28 at. %, for example about 25 at. %, as determined by EDX.

A titanium-based coating of the present disclosure has a titanium content. For example, a titanium-based coating may have a titanium content of from about 1 atomic percent (at. %) to about 60 at. %, such as about 2 at. % to about 40 at. %, about 3 at. % to about 30 at. %, about 4 at. % to about 25 at. %, about 5 at. % to about 20 at. %, about 10 at. % to about 20 at. %, about 12 at. % to about 20 at. %, or about 14 at. % to about 18 at. %, for example about 16 at. %, as determined by EDX.

A titanium-based coating of the present disclosure has a sodium content. For example, a titanium-based coating may have a sodium content of from about 1 atomic percent (at. %) to about 60 at. %, such as about 2 at. % to about 40 at. %, about 3 at. % to about 30 at. %, about 4 at. % to about 25 at. %, about 5 at. % to about 20 at. %, about 10 at. % to about 20 at. %, about 12 at. % to about 20 at. %, or about 16 at. % to about 20 at. %, for example about 18 at. %, as determined by EDX.

A titanium-based coating of the present disclosure has a titanium dioxide content of from about 5 weight percent (wt %) to about 95 wt %, such as about 5 wt % to about 70 wt %, about 30 wt% to about 70 wt%, about 35 wt% to about 60 wt%, about 40 wt% to about 55 wt%, for example about 45 wt%, based on the total weight of the coating, as determined by EDX. Alternatively, a titanium-based coating can have a titanium dioxide content of from about 80 wt% to about 95 wt%, about 80 wt% to about 90 wt%, for example about 85 wt%. The titanium dioxide may be present as an amorphous phase or a crystalline phase, such as an amorphous phase.

A titanium-based coating of the present disclosure has a Na₅Ti₃F₁₄ content of from about 5 weight percent (wt %) to about 95 wt %, such as about 5 wt % to about 70 wt %, about 30 wt% to about 70 wt%, about 35 wt% to about 60 wt%, about 40 wt% to about 55 wt%, for example about 45 wt%, based on the total weight of the coating, as determined by EDX. Alternatively, a titanium-based coating can have a Na₅Ti₃F₁₄ content of from about 80 wt% to about 95 wt%, about 80 wt% to about 90 wt%, for example about 85 wt%. The Na₅Ti₃F₁₄ may be present in the coating as a crystalline phase or an amorphous phase, such as a crystalline phase.

In one aspect, a titanium-based coating of the present disclosure includes from about 40 wt% to about 50 wt% amorphous titanium dioxide and from about 50 wt% to about 60 wt% crystalline Na₅Ti₃F₁₄.

### Methods of Making Titanium-Based Coatings

The present disclosure further provides methods for making titanium-based coatings on surfaces.

Methods include providing an aqueous solution composition (which is a composition formed in water) comprising a titanium fluoride. According to the presently claimed invention, the titanium fluoride is ammonium hexafluorotitanate ((NH₄)₂TiF₆). In some examples that are not presently claimed, the titanium fluoride may be TiF₄, TiF₂ or a metal fluorine complex having general formula A₂TiF₆, where A is selected from hydrogen, alkali metal, an ammonium group, coordinated water, or a combination thereof. For example, the titanium fluoride may be hexafluorotitanic acid, sodium hexafluorotitanate, potassium hexafluorotitanate, or ammonium hexafluorotitanate. A titanium fluoride provides a source of titanium and a source of fluorine to the coating.

Concentration of titanium fluoride in the aqueous solution composition may be from about 0.01 M to about 0.8 M. For example, concentration of titanium fluoride in the aqueous solution composition may be from about 0.1 M to about 0.4 M, about 0.1 M to about 0.35 M, about 0.15 M to about 0.35 M, about 0.15 M to about 0.3 M, about 0.18 M to about 0.3 M, about 0.18 M to about 0.25 M, about 0.18 M to about 0.22 M, for example about 0.2 M. The concentration of titanium fluoride can provide control of the thickness of the coating that is formed, the rate of coating deposition, the morphology of the coating, and or the corrosion protection qualities of the coating.

The aqueous solution composition further includes a sodium salt. A sodium salt may be sodium chloride, sodium fluoride, sodium bromide, or sodium iodide, for example a sodium salt is sodium chloride. A sodium salt provides a source of sodium to the formed coating. It has been discovered that including a sodium salt in the composition can provide a sodium content to the titanium-based coating (e.g. can provide Na₅Ti₃F₁₄, such as crystalline Na₅Ti₃F₁₄). The halide content can etch a native surface oxide on the substrate which provides deposition of a more adherent coating, as compared to conventional titanium-based coatings. In addition, halides are typically regarded as promoting corrosion of metal substrates, such as aluminum substrates. However, it has been discovered that titanium-based coatings of the present disclosure formed from halide-containing salts (the sodium salts of the present disclosure), and the coatings including a sodium content (e.g. Na₅Ti₃F₁₄, such as crystalline Na₅Ti₃F₁₄), can provide improved corrosion resistance as compared to a titanium-based coating without a sodium content.

The concentration of sodium salt in the aqueous solution composition is from about 0.2 M to about 2 M. For example, concentration of sodium salt in the aqueous solution composition may be from about 0.2 M to about 1.6 M, about 0.3 M to about 1.5 M, about 0.4 M to about 1.4 M, about 0.75 M to about 1.4 M, about 0.9 M to about 1.4 M, about 1 M to about 1.3 M, for example about 1.2 M. Alternatively, concentration of sodium salt in the aqueous solution composition is from about 0.2 M to about 0.5M, about 0.25 M to about 0.35 M, for example about 0.3 M. The concentration of sodium salt can provide control of the thickness of the coating that is formed, the rate of coating deposition, the morphology of the coating, and or the corrosion protection qualities of the coating.

The aqueous solution composition further comprises a fluorine scavenger. As used herein, the term "fluorine scavenger" refers to a compound or element that is capable of capturing fluoride ions in the aqueous solution composition comprising the titanium fluoride to precipitate the titanium-based coating. By providing an aqueous solution composition comprising a titanium fluoride, sodium salt, and a fluorine scavenger, and contacting a substrate with the aqueous solution composition, a titanium-based coating may be precipitated or deposited on the substrate.

The fluorine scavenger is selected from boric acid, alkali metal borate, ammonium borate, boron anhydride, boron monoxide, aluminum chloride, metallic aluminum, aluminum oxide, or a combination thereof. In various aspects, the fluorine scavenger is boric acid.

The concentration of fluorine scavenger in the aqueous solution composition is from about 0.1 M to about 1.5 M. For example, concentration of fluorine scavenger in the aqueous solution composition may be from about 0.3 M to about 1 M, about 0.35 M to about 1 M, about 0.35 M to about 0.9 M, about 0.35 M to about 0.85 M, about 0.4 M to about 0.85 M, about 0.4 M to about 0.8 M, about 0.4 M to about 0.75 M, about 0.45 M to about 0.75 M, about 0.5 M to about 0.75 M, about 0.55 M to about 0.7 M, such as about 0.6 M or about 0.65 M. The concentration of fluorine scavenger can provide control of the thickness of the coating that is formed, the rate of coating deposition, the morphology of the coating, and or the corrosion protection qualities of the coating.

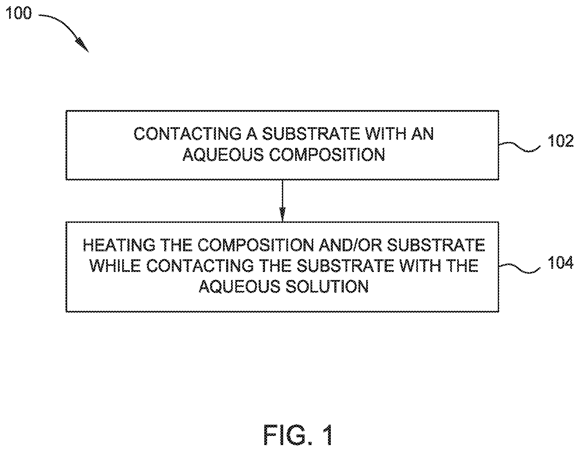

FIG. 1 is a flow diagram of a method **100** for forming a titanium-based coating. A titanium-based coating can be formed by contacting **102** a substrate with the aqueous solution composition, e.g. at a temperature of less than about 100°C, to obtain the titanium-based coating on the substrate. For example, a substrate can be introduced facedown into the solution at room temperature for a period of time.

Shape and structure of the substrate may be arbitrarily selected, and is not limited to a planar surface. For example, the substrate may have a non-planar shape, and having a surface onto which the amorphous titanium-based coating is to be applied. The substrate may be of any suitable material, such as glass, metals, ceramics, organic polymer materials, plastics, or semiconductors. For example, a substrate can be a metal substrate made of aluminum, aluminum alloy, nickel, iron, iron alloy, steel, titanium, titanium alloy, copper, copper alloy, or a mixture thereof.

A substrate can be a component, such as a blade of a wind turbine. In at least one aspect, a substrate is a vehicle component. A vehicle component is any suitable component of a vehicle, such as a structural component, such as a panel or joint, of an aircraft, automobile, etc. Examples of a vehicle component include an airfoil (such as a rotor blade), an auxiliary power unit, a nose of an aircraft, a fuel tank, a tail cone, a panel, a coated lap joint between two or more panels, a wing-to-fuselage assembly, a structural aircraft composite, a fuselage body-joint, a wing rib-to-skin joint, and/or other internal component.

Contacting a substrate with the aqueous solution composition may be carried out by immersing the substrate in the aqueous solution composition. The titanium-based coating may be precipitated on at least a portion of the substrate that is in contact with the aqueous solution composition. In various embodiments, the titanium-based coating is precipitated on substantially all of the substrate that is in contact with the aqueous solution composition.

Rate of formation of metal oxide may be controlled by concentration of and ratio of titanium fluoride to fluorine scavenger, titanium fluoride to sodium salt, sodium salt to fluorine scavenger, pH, and temperature, for example.

For example, referring to the equations shown below, by Le Chatelier's principle, a higher concentration of titanium fluoride on the left side of the equation results in a faster forward reaction, as this drives the equation to the right. By the same principle, lowering concentration of HF present on the right side of the equation, for example, by increasing concentration of fluorine scavenger such as H₃BO₃, drives the equation to the right, resulting in faster formation of metal oxide.

[TiF₆]²⁻ + nH₂O → [TiF₆₋ₙ(OH)ₙ]²⁻ + nHF

H₃BO₃ + 4HF → HBF₄ + 3H₂O

pH, on the other hand, may affect solubility of the target metal oxide. Generally, the lower the solubility of the target metal oxide, the higher the driving force for precipitation.

Contacting **102** may be performed at ambient temperature (e.g. room temperature such as about 23°C). Alternatively, Method **100** includes optionally heating **104** the composition and/or the substrate while contacting the substrate with the aqueous solution composition.

In various embodiments, heating the substrate and/or the composition is performed at a temperature of from about 40°C to about 80°C, such as about 45 °C to about 70°C, about 50°C to about 65°C, about 55°C to about 65°C, about 60°C. In some embodiments, contacting a substrate with the aqueous solution composition is carried out at a temperature of about 60°C to obtain a titanium-based coating on the substrate.

Contacting **102** a substrate with the aqueous solution composition may be carried out for any suitable time period that is sufficient to obtain the titanium-based coating. The time period may depend on the titanium fluoride used, as well as temperature at which the substrate is contacted with the aqueous solution composition. If lower temperatures are used, for example, a longer contacting time to deposit or to form the titanium-based coating may be suitable. By controlling the contacting time, thickness of titanium-based coating that is formed on the substrate may be controlled.

In various aspects, contacting a substrate with the aqueous solution composition is carried out for a time period of from about 2 hours to about 24 hours, such as about 4 hours to about 24 hours, about 6 hours to about 24 hours, about 12 hours to about 24 hours, for example about 16 hours.

Overall the effect of one or more (e.g., all) of these variables is to influence the properties of the coatings. The properties influenced may be one or more of: 1) physical properties such as thickness and morphology (smooth, rough, cracked, uniform, patchy) 2) chemical properties such as elemental and phase composition, and 3) performance properties such as corrosion protection, adhesion to the substrate (which affects the corrosion protection, and adhesion to additional coating layers (such as primers and clear coats) place on top of the coating. The extent of protection provided by the present application is determined by the appended claims.

### Examples

All chemicals were obtained from Aldrich and used as received (no purification).

Methods: Corrosion of a panel coated with a titanium-based coating (a sample) can be monitored using electrochemical methods. Electrochemical impedance spectroscopy (EIS) was performed on coated and uncoated aluminum panels in an aqueous electrolyte containing 0.1 M NaCl. Typical measurements were performed with a neutral electrolyte (using a borate buffer to maintain pH 6.4), but measurements in acidic conditions, pH 3.0 (prepared using HCl), and basic conditions, pH 10.0 (prepared using NaOH), were also performed. A Pt wire was used as a counter electrode along with a Ag/AgCl reference electrode. EIS measurements were performed using an AC bias voltage of +-10 mV over a frequency range of 10⁻² to 10⁵ Hz. Corrosion resistance was determined using a circuit model with a single resistor and a constant phase element in parallel.

The coatings were deposited by immersing the surface to be coated facedown in the precursor solution for 16 hours at room temperature. The substrates used were ~1" x 1" 2024 Al coupons and 4" x 6" 2024 Al panels prepared using a standard surface preparation. Following coating, the coated surface was rinsed (running DI water, ~1 min to 5 min) and dried at room temperature.

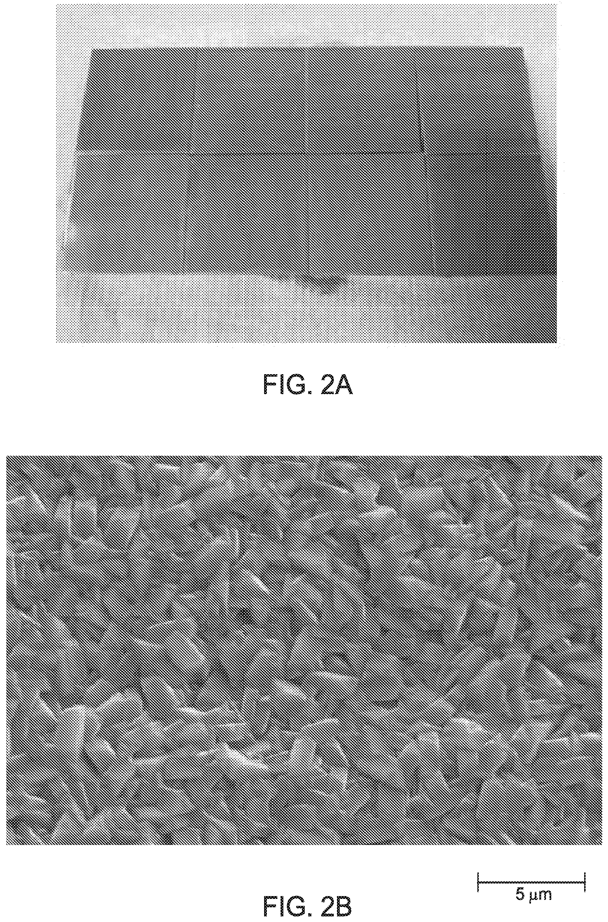

The appearance of a coating containing titanium dioxide and Na₅Ti₃F₁₄ is shown in FIG. 2a. Optically (FIG. 2a), the surface appears as a matte brown without any visible signs of corrosion, such as pits or corrosion product deposits. Using scanning electron microscopy (SEM), micrometer size crystallites were apparent (FIG. 2b).

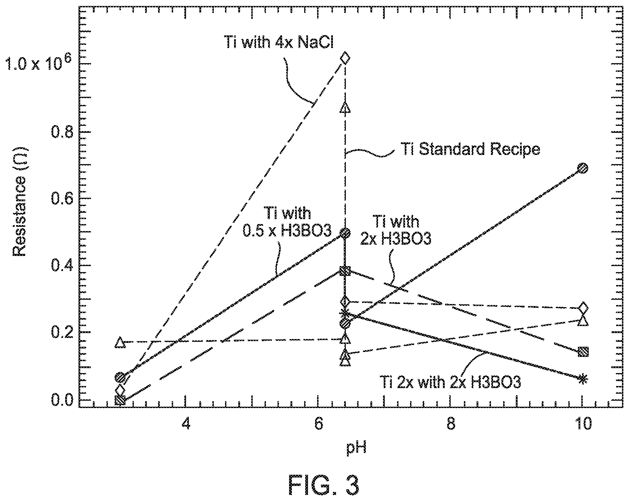

Following coating, samples were tested for corrosion protection in a bulk electrolyte of 0.1 M NaCl buffered with borate at pH 6.4, as well as unbuffered at pH 3 and 10. Electrochemical impedance spectroscopy (EIS) was used to determine the polarization resistance. The polarization resistance is a measure of the corrosion protection with higher polarization resistance corresponding to improved corrosion protection. The polarization resistances of several titanium dioxide/Na₅Ti₃F₁₄ coatings are shown in FIG. 3. The coatings had a thickness of from about 1 micrometer to about 5 micrometers.

The "Ti standard" recipe corresponds to a 0.2 M (NH₄)₂TiF₆, 0.6 M H₃BO₃, and 0.3 M NaCl precursor solution. The "Ti with 4x NaCl" recipe corresponds to a 0.2 M (NH₄)₂TiF₆, 0.6 M H₃BO₃, and 1.2 M NaCl precursor solution. The "Ti with 0.5x H₃BO₃" recipe corresponds to a 0.2 M (NH₄)₂TiF₆, 0.3 M H₃BO₃, and 0.3 M NaCl precursor solution. The "Ti with 2x H₃BO₃" recipe corresponds to a 0.2 M (NH₄)₂TiF₆, 1.0 M H₃BO₃, and 0.3 M NaCl precursor solution. The "Ti 2x with 2x H₃BO₃" recipe corresponds to a 0.4 M (NH₄)₂TiF₆, 1.0 M H₃BO₃, and 0.3 M NaCl precursor solution. At pH 6.4, coatings with polarization resistances of 100 kOhms to 1 MOhm were obtained. This may be compared with an uncoated Al surface which has a resistance of ~10 kOhms. Thus, increases relative to uncoated surfaces of 10 x to 100 x were seen.

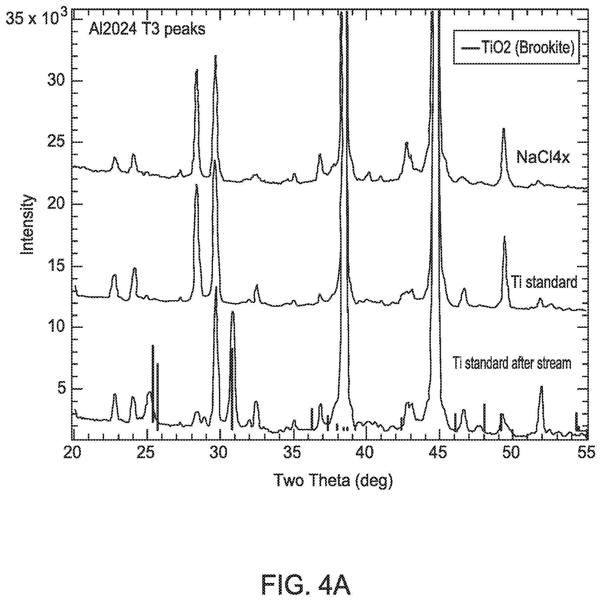

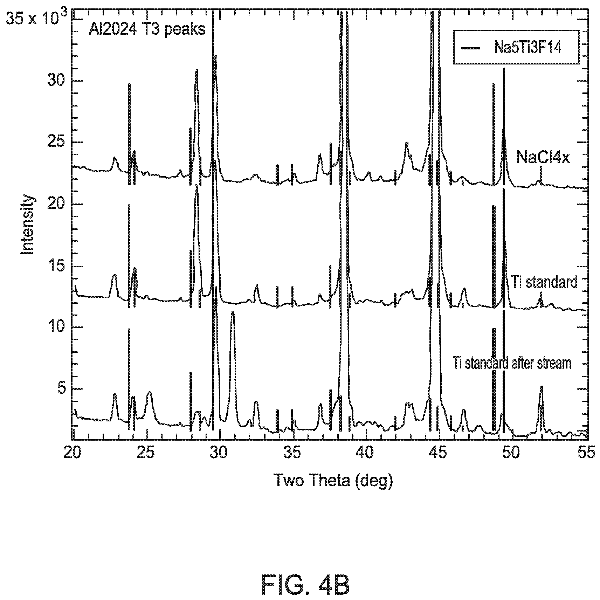

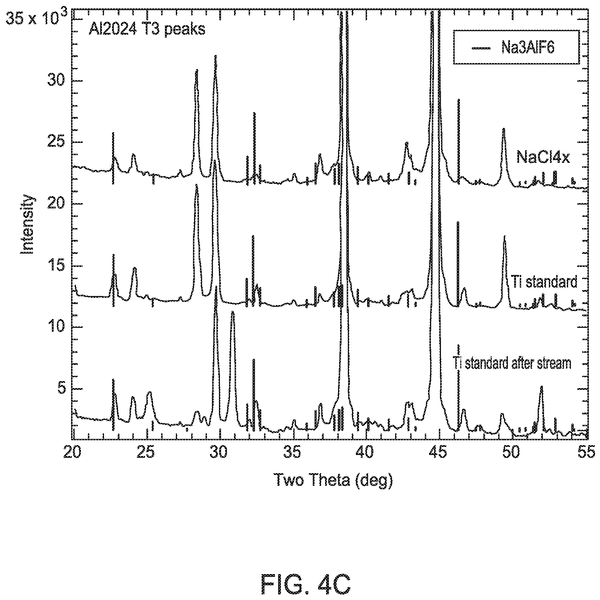

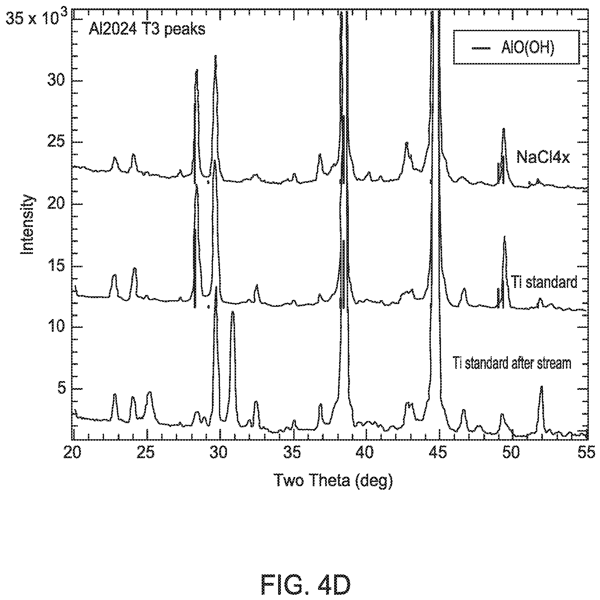

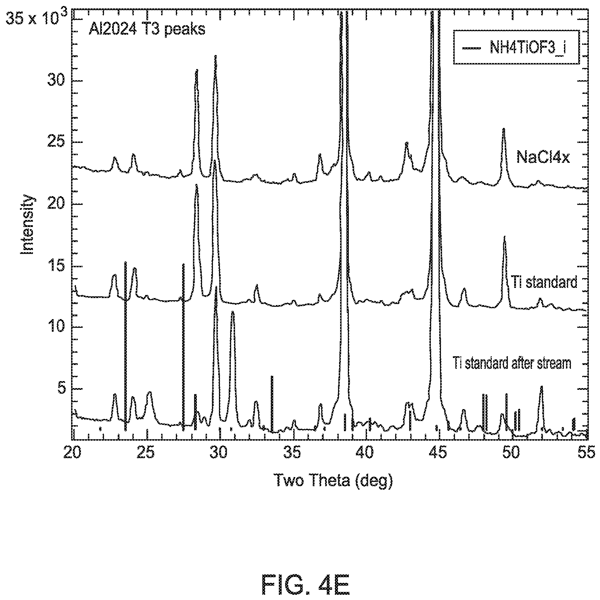

To determine the composition of the coatings, X-ray diffraction (XRD) analysis was performed to identify the crystalline phases, and energy dispersive X-ray spectroscopy (EDX) was performed to determine the elemental composition. As shown in Figure 4, coated samples show predominately Na₅Ti₃F₁₄ (see NaCl 4x and Ti standard recipe patterns). After treatment of a Ti standard recipe coating with steam, peaks corresponding to the Brookite phase of TiO₂ are seen. (Steaming was performed by facing the sample down where the sample was held about an inch above the surface of water in a jar in a 110°C oven overnight.) The results indicate that the coating as deposited from the precursor solution is comprised of crystalline Na₅Ti₃F₁₄ together with amorphous TiO₂.

FIGS. 4A-4E show XRD patterns of the coatings. (top): Pattern from a "NaCl 4x" recipe, which is 0.2 M (NH₄)₂TiF₆ + 0.6 M H₃BO₃ + 1.2 M NaCl. (middle): Pattern from a "Ti standard" recipe, which is 0.2 M (NH₄)₂TiF₆ + 0.6 M H₃BO₃ + 0.3 M NaCl. (bottom): Pattern from Ti standard recipe after treatment in steam. The minor peaks shown in the XRD spectra are the peaks of the Al 2024 alloy substrate.

To quantify the relative amounts of Na₅Ti₃F₁₄ and TiO₂ of coatings, elemental analysis (EDX) was used. The EDX results are shown in Table 1. The coatings, independent of the NaCl concentration, all contain ~25 atomic percent oxygen. Assuming that this oxygen is contained in the initially amorphous TiO₂ phase, as seen after steam-induced partial crystallization to Brookite, the overall elemental composition is approximately accounted for by a coating composed of 45 ±15% amorphous TiO₂ and 55±15% crystalline Na₅Ti₃F₁₄.

**Table 1**

| | 0.3 M NaCl | 1 M NaCl | 2 M NaCl |
|---|---|---|---|
| O | 25 | 26 | 24 |
| F | 40 | 40 | 40 |
| Ti | 16 | 16 | 16 |
| Al | 1 | 0.1 | 0.2 |
| Na | 18 | 18 | 19 |

Overall, methods of the present disclosure provide titanium oxide coatings having a sodium content. It has been discovered that including a sodium salt in the composition can provide a sodium content to the titanium-based coating (e.g. can provide Na₅Ti₃F₁₄, such as crystalline Na₅Ti₃F₁₄). Without being bound by theory, it is believed that the halide content of the salt additive can etch a native surface oxide on the substrate which provides deposition of a more adherent coating, as compared to conventional titanium-based coatings. In addition, halides are typically regarded as promoting corrosion of metal substrates, such as aluminum substrates. However, it has been discovered that titanium-based coatings of the present disclosure formed from halide-containing salts, and the coatings including sodium content (e.g. Na₅Ti₃F₁₄, such as crystalline Na₅Ti₃F₁₄), can provide improved corrosion resistance as compared to a titanium-based coating without a sodium content.

Although generally discussed in the context of aviation use, other possible uses of methods of the present disclosure are contemplated, such as on wind turbine blades, in non-aerospace transportation, and in communications, including satellite dishes.

The descriptions of the various aspects of the present disclosure have been presented for purposes of illustration. The terminology used herein was chosen to best explain the principles of the aspects, the practical application or technical improvement over technologies found in the marketplace, or to enable others of ordinary skill in the art to understand the aspects disclosed herein.

## Claims

1. A coating disposed on a surface, the coating comprising:
an oxygen content;
a fluorine content;
a titanium content; and
a sodium content;
wherein the coating comprises titanium dioxide and Na₅Ti₃F₁₄,
wherein the coating has a titanium dioxide content of from about 5 wt% to about 95 wt%, based on the total weight of the coating, and wherein the coating has a Na₅Ti₃F₁₄ content of from about 5 wt% to about 95 wt%, based on the total weight of the coating.

2. The coating of claim 1, wherein the coating has a thickness of:
(i) from about 0.01 mil (0.000254 millimeter) to about 0.5 mil (0.0127 millimeter); or
(ii) from about 0.02 mil (0.000508 millimeter) to about 0.2 mil (0.00508 millimeter).

3. The coating of claim 1 or claim 2, wherein the coating comprises an amorphous titanium dioxide phase and a crystalline Na₅Ti₃F₁₄ phase.

4. The coating of any of claims 1 to 3, wherein the coating comprises a fluorine content of from about 25 at. % to about 50 at. %.

5. The coating of any of claims 1 to 4, wherein the coating comprises a sodium content of from about 4 at. % to about 25 at. %, preferably wherein the coating comprises a sodium content of from about 16 at. % to about 20 at. %.

6. The coating of any of claims 1 to 5, wherein the coating comprises an oxygen content of from about 20 at. % to about 30 at. %, preferably wherein the coating comprises a titanium content of from about 10 at. % to about 20 at. %.

7. The coating of claim 1, wherein the coating has a titanium dioxide content of from about 30 wt% to about 70 wt%, based on the total weight of the coating, preferably wherein the coating has a Na₅Ti₃F₁₄ content of from about 30 wt% to about 70 wt%, based on the total weight of the coating.

8. The coating of claim 1 or claim 7, wherein the coating comprises an amorphous metal oxide phase and a crystalline sodium-containing phase; and/or
wherein the coating comprises from about 40 wt% to about 50 wt% amorphous titanium dioxide and from about 50 wt% to about 60 wt% crystalline Na₅Ti₃F₁₄, based on the total weight of the coating.

9. A vehicle component comprising the coating of any of claims 1 to 8, wherein the surface is a surface of the vehicle component.

10. A method of making a titanium-based coating, the method comprising:
contacting a substrate with an aqueous solution composition comprising:
from about 0.01 M to about 0.8 M of a titanium fluoride;
from about 0.2 M to about 2 M of a sodium salt; and
from about 0.1 M to about 1.5 M of a fluorine scavenger;
wherein the titanium fluoride is (NH₄)₂TiF₆; and
wherein the fluorine scavenger is selected from boric acid, alkali metal borate, ammonium borate, boron anhydride, boron monoxide, aluminum chloride, metallic aluminum, aluminum oxide, or a combination thereof.

11. The method of claim 10, wherein the composition comprises:
from about 0.1 M to about 0.4 M of the titanium fluoride;
from about 0.2 M to about 1.8 M of the sodium salt; and
from about 0.3 M to about 1 M of the fluorine scavenger.

12. The method of claims 10 or 11, wherein:
(i) the sodium salt is sodium chloride; and/or
(ii) the fluorine scavenger is boric acid.

13. The method of any of claims 10 to 12, wherein the substrate comprises aluminum, preferably wherein the substrate is a vehicle component of an aircraft.

14. The method of any of claims 10 to 13, wherein contacting comprises immersing the substrate in the aqueous solution composition.

15. The method of any of claims 10 to 14, further comprising heating the composition and/or substrate to a temperature of from about 40°C to about 80°C.

## Patentansprüche

1. Beschichtung, die auf einer Oberfläche angeordnet ist, wobei die Beschichtung Folgendes umfasst:
einen Sauerstoffgehalt;
einen Fluorgehalt;
einen Titangehalt; und
einen Natriumgehalt;
wobei die Beschichtung Titandioxid und Na₅Ti₃F₁₄ umfasst,
wobei die Beschichtung einen Titandioxidgehalt von etwa 5 Gew.-% bis etwa 95 Gew.-%, bezogen auf das Gesamtgewicht der Beschichtung, aufweist und wobei die Beschichtung einen Gehalt an Na₅Ti₃F₁₄ von etwa 5 Gew.-% bis etwa 95 Gew.-%, bezogen auf das Gesamtgewicht der Beschichtung, aufweist.

2. Beschichtung nach Anspruch 1, wobei die Beschichtung eine Dicke wie folgt aufweist:
(i) von etwa 0,01 mil (0,000254 Millimeter) bis etwa 0,5 mil (0,0127 Millimeter); oder
(ii) von etwa 0,02 mil (0,000508 Millimeter) bis etwa 0,2 mil (0,00508 Millimeter).

3. Beschichtung nach Anspruch 1 oder Anspruch 2, wobei die Beschichtung eine amorphe Titandioxidphase und eine Phase von kristallinem Na₅Ti₃F₁₄ umfasst.

4. Beschichtung nach einem der Ansprüche 1 bis 3, wobei die Beschichtung einen Fluorgehalt von etwa 25 Atom.-% bis etwa 50 Atom.-% umfasst.

5. Beschichtung nach einem der Ansprüche 1 bis 4, wobei die Beschichtung einen Natriumgehalt von etwa 4 Atom.-% bis etwa 25 Atom.-% umfasst, wobei die Beschichtung vorzugsweise einen Natriumgehalt von etwa 16 Atom.-% bis etwa 20 Atom.-% umfasst.

6. Beschichtung nach einem der Ansprüche 1 bis 5, wobei die Beschichtung einen Sauerstoffgehalt von etwa 20 Atom.-% bis etwa 30 Atom.-% umfasst, wobei die Beschichtung vorzugsweise einen Titangehalt von etwa 10 Atom.-% bis etwa 20 Atom.-% umfasst.

7. Beschichtung nach Anspruch 1, wobei die Beschichtung einen Titandioxidgehalt von etwa 30 Gew.-% bis etwa 70 Gew.-%, bezogen auf das Gesamtgewicht der Beschichtung, aufweist, wobei die Beschichtung vorzugsweise einen Gehalt an Na₅Ti₃F₁₄ von etwa 30 Gew.-% bis etwa 70 Gew.- %, bezogen auf das Gesamtgewicht der Beschichtung, aufweist.

8. Beschichtung nach Anspruch 1 oder Anspruch 7, wobei die Beschichtung eine amorphe Metalloxidphase und eine kristalline natriumhaltige Phase umfasst; und/oder wobei die Beschichtung etwa 40 Gew.-% bis etwa 50 Gew.-% amorphes Titandioxid und etwa 50 Gew.-% bis etwa 60 Gew.- % kristallines Na₅Ti₃F₁₄, bezogen auf das Gesamtgewicht der Beschichtung, umfasst.

9. Fahrzeugkomponente, die die Beschichtung nach einem der Ansprüche 1 bis 8 umfasst, wobei die Oberfläche eine Oberfläche der Fahrzeugkomponente ist.

10. Verfahren zum Herstellen einer Beschichtung auf Titanbasis, wobei das Verfahren Folgendes umfasst:
Kontaktieren eines Substrats mit einer wässrigen Lösungszusammensetzung, die Folgendes umfasst:
von etwa 0,01 M bis etwa 0,8 M eines Titanfluorids;
von etwa 0,2 M bis etwa 2 M eines Natriumsalzes; und
von etwa 0,1 M bis etwa 1,5 M eines Fluorfängers;
wobei das Titanfluorid (NH₄)₂TiF₆ ist; und
wobei der Fluorfänger ausgewählt ist aus Borsäure, Alkalimetallborat, Ammoniumborat, Boranhydrid, Bormonoxid, Aluminiumchlorid, metallischem Aluminium, Aluminiumoxid oder einer Kombination davon.

11. Verfahren nach Anspruch 10, wobei die Zusammensetzung Folgendes umfasst:
von etwa 0,1 M bis etwa 0,4 M des Titanfluorids;
von etwa 0,2 M bis etwa 1,8 M des Natriumsalzes; und
von etwa 0,3 M bis etwa 1 M des Fluorfängers.

12. Verfahren nach Anspruch 10 oder 11, wobei:
(i) das Natriumsalz Natriumchlorid ist; und/oder
(ii) der Fluorfänger Borsäure ist.

13. Verfahren nach einem der Ansprüche 10 bis 12, wobei das Substrat Aluminium umfasst, wobei das Substrat vorzugsweise eine Fahrzeugkomponente eines Flugzeugs ist.

14. Verfahren nach einem der Ansprüche 10 bis 13, wobei Kontaktieren Eintauchen des Substrats in die wässrige Lösungszusammensetzung umfasst.

15. Verfahren nach einem der Ansprüche 10 bis 14, ferner umfassend Erwärmen der Zusammensetzung und/oder des Substrats auf eine Temperatur von etwa 40 °C bis etwa 80 °C.

## Revendications

1. Revêtement disposé sur une surface, le revêtement comprenant :
une teneur en oxygène ;
une teneur en fluor ;
une teneur en titane ; et
une teneur en sodium ;
le revêtement comprenant du dioxyde de titane et Na₅Ti₃F₁₄, dans lequel le revêtement a une teneur en dioxyde de titane d'environ 5 % en poids à environ 95 % en poids, sur la base du poids total du revêtement, et dans lequel le revêtement a une teneur en Na₅Ti₃F₁₄ d'environ 5 % en poids à environ 95 % en poids, sur la base du poids total du revêtement.

2. Revêtement selon la revendication 1, dans lequel le revêtement a une épaisseur :
(i) d'environ 0,01 mil (0,000254 millimètre) à environ 0,5 mil (0,0127 millimètre) ; ou
(ii) d'environ 0,02 mil (0,000508 millimètre) à environ 0,2 mil (0,00508 millimètre).

3. Revêtement selon la revendication 1 ou la revendication 2, dans lequel le revêtement comprend une phase de dioxyde de titane amorphe et une phase de Na₅Ti₃F₁₄ cristallin.

4. Revêtement selon l'une quelconque des revendications 1 à 3, dans lequel le revêtement comprend une teneur en fluor d'environ 25 % at. à environ 50 % at.

5. Revêtement selon l'une quelconque des revendications 1 à 4, dans lequel le revêtement comprend une teneur en sodium d'environ 4 % at. à environ 25 % at., préférablement dans lequel le revêtement comprend une teneur en sodium d'environ 16 % at. à environ 20 % at. .

6. Revêtement selon l'une quelconque des revendications 1 à 5, dans lequel le revêtement comprend une teneur en oxygène d'environ 20 % at. à environ 30 % at., préférablement dans lequel le revêtement comprend une teneur en titane d'environ 10 % at. à environ 20 % at. .

7. Revêtement selon la revendication 1, dans lequel le revêtement a une teneur en dioxyde de titane d'environ 30 % en poids à environ 70 % en poids, sur la base du poids total du revêtement, de préférence dans lequel le revêtement a une teneur en Na₅Ti₃F₁₄ d'environ 30 % en poids à environ 70 % en poids, sur la base du poids total du revêtement.

8. Revêtement selon la revendication 1 ou la revendication 7, dans lequel le revêtement comprend une phase d'oxyde métallique amorphe et une phase cristalline contenant du sodium ; et/ou
dans lequel le revêtement comprend d'environ 40 % en poids à environ 50 % en poids de dioxyde de titane amorphe et d'environ 50 % en poids à environ 60 % en poids de Na₅Ti₃F₁₄ cristallin, sur la base du poids total du revêtement.

9. Composant de véhicule comprenant le revêtement selon l'une quelconque des revendications 1 à 8, dans lequel la surface est une surface du composant de véhicule.

10. Procédé de fabrication d'un revêtement à base de titane, le procédé comprenant :
la mise en contact d'un substrat avec une composition de solution aqueuse comprenant :
d'environ 0,01 M à environ 0,8 M d'un fluorure de titane ;
d'environ 0,2 M à environ 2 M d'un sel de sodium ; et
d'environ 0,1 M à environ 1,5 M d'un agent de piégeage de fluor ;
dans lequel le fluorure de titane est (NH₄)₂TiF₆ ; et
dans lequel l'agent de piégeage de fluor est choisi parmi l'acide borique, un borate de métal alcalin, le borate d'ammonium, l'anhydride de bore, le monoxyde de bore, le chlorure d'aluminium, l'aluminium métallique, l'oxyde d'aluminium ou une combinaison de ceux-ci.

11. Procédé selon la revendication 10, dans lequel la composition comprend :
d'environ 0,1 M à environ 0,4 M du fluorure de titane ;
d'environ 0,2 M à environ 1,8 M du sel de sodium ; et
d'environ 0,3 M à environ 1 M de l'agent de piégeage de fluor.

12. Procédé selon la revendication 10 ou 11, dans lequel :
(i) le sel de sodium est le chlorure de sodium ; et/ou
(ii) l'agent de piégeage de fluor est l'acide borique.

13. Procédé selon l'une quelconque des revendications 10 à 12, dans lequel le substrat comprend l'aluminium, de préférence dans lequel le substrat est un composant de véhicule d'un aéronef.

14. Procédé selon l'une quelconque des revendications 10 à 13, dans lequel la mise en contact comprend l'immersion du substrat dans la composition de solution aqueuse.

15. Procédé selon l'une quelconque des revendications 10 à 14, comprenant en outre le chauffage de la composition et/ou du substrat jusqu'à une température d'environ 40 °C à environ 80 °C.
